# FASCICULE DE BREVET EUROPEEN

(11) **EP 1 928 740 B1**
(45) Date de publication et mention de la délivrance du brevet: **17.02.2010**
(21) Numéro de dépôt: 06793753.2
(22) Date de dépôt: 22.09.2006
(51) Int. Cl.: B64D 27/26

(54) **MAT D'ACCROCHAGE DE MOTEUR POUR AERONEF**
HALTERUNG FUER FLUGZEUGTRIEBWERK
AIRCRAFT ENGINE MOUNT

(30) Priorité: 26.09.2005 FR 0552866
(43) Date de publication de la demande: 11.06.2008
(73) Titulaire: AIRBUS OPERATIONS, 31060 Toulouse (FR)
(72) Inventeur: LAFONT, Laurent, F-31320 Pechbusque (FR); JOURNADE, Frédéric, F-31100 Toulouse (FR); RENAUD, Eric, F-31480 Brignemont (FR)
(74) Mandataire: Ilgart, Jean-Christophe
(86) Numéro de dépôt international: PCT/EP2006/066637
(87) Numéro de publication internationale: WO 2007/033995

(56) Documents cités:
- EP-A- 0 147 878
- EP-A- 0 844 172
- EP-A- 0 844 174
- EP-A- 1 053 937
- EP-A- 1 574 429

## Description

### DOMAINE TECHNIQUE

La présente invention se rapporte de façon générale à un ensemble moteur pour aéronef, du type comprenant un moteur et un mât d'accrochage notamment équipé d'un système de montage du moteur comportant une pluralité d'attaches moteur et étant interposé entre une structure rigide du mât d'accrochage et le moteur.

L'invention se rapporte également à un tel mât d'accrochage de moteur d'aéronef.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieur et inférieur et de deux panneaux latéraux raccordés entre eux par l'intermédiaire de nervures transversales, ce caisson étant fermé vers l'avant et vers l'arrière respectivement par l'intermédiaire d'une nervure de fermeture avant et d'une nervure de fermeture arrière.

D'autre part, le mât est muni d'un système de montage du moteur interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à l'attache moteur arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Dans certaines réalisations de l'art antérieur, le système de montage du moteur comporte une attache avant, dite attache de soufflante en raison du fait qu'elle est destinée à être montée fixement sur le carter de soufflante du moteur, qui comporte un corps d'attache disposant d'une surface de contact horizontale plaquée contre une surface de contact horizontale de la structure rigide, ces surfaces de contact étant également appelées surfaces de fixation. L'interface de fixation horizontale formée par ces deux surfaces s'étend donc selon un plan défini par les directions longitudinale et transversale du mât d'accrochage, et se situe généralement au niveau d'une surface externe du longeron inférieur du caisson dans le cas où le moteur est destiné à être suspendu sous la voilure de l'aéronef. En effet, le corps d'attache de l'attache moteur avant est généralement fixé sur le longeron inférieur du caisson, en étant agencé sous celui-ci.

Cet agencement présente un inconvénient non négligeable qui est que c'est la totalité du corps d'attache qui fait saillie du caisson vers le bas, ce qui entraîne un positionnement de la structure rigide très au-dessus du carter de soufflante du moteur, provoquant ainsi une forme de mât de grande hauteur, très pénalisante d'un point de vue traînée aérodynamique, et se traduisant bien évidemment par des pertes de performances de l'aéronef. A cet égard, il est noté que ces pertes sont relativement conséquentes en raison des dimensions importantes du corps d'attache, imposées par la nécessité d'assurer la transmission des efforts provenant du moteur en direction de la structure rigide du mât d'accrochage.

De l'art antérieur, il est également connu le document EP-A-0 844 172, reprenant l'ensemble des caractéristiques du préambule de la revendication 1, dont la conception de l'attache moteur avant est complexe.

### EXPOSÉ DE L'INVENTION

L'invention a donc pour but de proposer un mât d'accrochage de moteur pour aéronef remédiant à l'inconvénient mentionné ci-dessus relatif aux réalisations de l'art antérieur, et également de présenter un ensemble moteur disposant d'un tel mât.

L'invention a aussi pour objet un procédé de montage d'un moteur sur la structure rigide de ce mât.

Pour ce faire, l'invention a pour objet un mât d'accrochage pour moteur d'aéronef selon la revendication 1.

Avantageusement, il ressort de la définition de l'invention indiquée ci-dessus que le mât d'accrochage a été modifié par rapport à ceux rencontrés antérieurement de façon à ce que le corps d'attache de l'attache moteur avant ne se situe plus au dessous du longeron inférieur et de la nervure de fermeture avant du caisson, mais en avant par rapport à cette dernière. Ainsi, dans le cas où le mât est destiné à assurer la suspension du moteur sous la voilure de l'aéronef, l'agencement proposé permet grossièrement de positionner le corps d'attache au moins partiellement au-dessus du longeron inférieur du caisson, alors que dans l'art antérieur, ce même corps s'étendait vers le bas seulement à partir de ce même longeron inférieur.

Par conséquent, une telle configuration engendre clairement une réduction de l'encombrement au-dessous du longeron inférieur du caisson, et génère donc une diminution des perturbations aérodynamiques au droit de l'attache moteur avant. Pour un corps d'attache de mêmes dimensions, la traînée engendrée est donc avantageusement plus faible que celle rencontrée antérieurement.

D'autre part, toujours dans le cas préférentiel où le mât est destiné à assurer la suspension du moteur sous la voilure de l'aéronef, le fait de surélever le corps d'attache de l'attache avant permet d'augmenter la garde au sol sous le moteur associé.

Bien entendu, le fait de prévoir un plaquage du corps d'attache contre la surface avant de la nervure de fermeture avant, c'est-à-dire contre sa surface extérieure habituellement orientée verticalement, n'implique pas nécessairement de prévoir un contact direct entre ces deux éléments.

Néanmoins, on prévoit préférentiellement que le corps d'attache comprend une surface de contact arrière au contact d'une surface de contact avant de la structure rigide appartenant à la surface avant de la nervure de fermeture avant, le corps d'attache et la nervure étant alors plaquées l'une contre l'autre et en contact par l'intermédiaire de leurs surfaces de contact respectives.

D'autre part, selon l'invention, l'attache moteur avant comprend au moins un pion de cisaillement traversant au moins partiellement le corps d'attache ainsi que la nervure de fermeture avant. En d'autres termes, chacun des deux éléments constitués par le corps d'attache et la nervure de fermeture avant est au moins partiellement traversé par chaque pion de cisaillement.

Ajouté à cela, l'attache moteur avant comprend en outre préférentiellement une pluralité de boulons de traction assurant la fixation du corps d'attache sur la nervure de fermeture avant, ces boulons permettant notamment de limiter le dimensionnement du/des pions de cisaillement employés.

De manière préférentielle, chaque pion de cisaillement est orienté sensiblement selon une direction longitudinale du mât, ce positionnement étant tout à fait adapté pour assurer la transmission des efforts s'exerçant selon les directions transversale et verticale du mât. A titre d'exemple préférentiel, on prévoit alors que les pions de cisaillement sont prévus au nombre de deux, et espacés l'un de l'autre selon la direction transversale du mât.

D'une manière générale, on s'assure de préférence que les pions soient disposés orthogonalement à la nervure de fermeture avant, qui est quant à elle préférentiellement agencée verticalement, à savoir dans un plan défini par les directions transversale et verticale du mât.

Néanmoins, l'invention couvre également les cas dans lesquels la nervure de fermeture avant est inclinée par rapport à la verticale, tout en restant parallèle à la direction transversale.

De préférence, l'attache moteur avant est conçue de manière à assurer la reprise des efforts s'exerçant selon la direction transversale et la direction verticale du mât, et également conçue de manière à assurer la reprise du moment s'exerçant selon la direction longitudinale de ce mât.

Par ailleurs, le système de montage du moteur, qui est de préférence un système isostatique, comporte en outre un dispositif de reprise des efforts. de poussée, ainsi qu'une attache moteur arrière conçue de manière à assurer la reprise des efforts s'exerçant selon les directions transversale et verticale du mât.

L'invention a également pour objet un ensemble moteur pour aéronef comprenant un mât tel que celui qui vient d'être présenté, ainsi qu'un moteur fixé sur ce mât.

Enfin, l'invention a également pour objet un procédé de montage d'un moteur d'aéronef sur la structure rigide d'un mât d'accrochage tel que celui qui vient d'être décrit. Il comporte une étape de fixation, sur la nervure de fermeture avant de la structure rigide, du corps d'attache de l'attache moteur avant préalablement monté sur un carter du moteur, ce corps d'attache étant destiné à être fixé sur la nervure de fermeture avant par l'intermédiaire d'au moins un pion de cisaillement traversant un premier orifice primaire et un second orifice primaire pratiqués respectivement dans le corps d'attache et dans la nervure de fermeture avant, cette étape de fixation du corps d'attache sur la nervure de fermeture avant comprenant les opérations successives suivantes :
- pré-positionnement du moteur par rapport au mât d'accrochage dans le but de mettre le premier orifice primaire en regard du second orifice primaire ; et
- introduction d'un axe équipé d'une tête bombée de centrage à travers les deux orifices primaires en regard, de sorte que cet axe équipé de la tête bombée de centrage et logé dans les deux orifices primaires constitue le pion de cisaillement.

Ainsi, comme cela a déjà été mentionné ci-dessus, l'invention proposée a notamment pour particularité de mettre en oeuvre une structure rigide disposant d'une surface de contact orientée vers l'avant, contrairement à ce qui était rencontré dans les réalisations de l'art antérieur dans lesquelles la surface de contact prévue sur la structure rigide et destinée à recevoir le corps d'attache de l'attache avant était orientée horizontalement, sous cette même structure rigide.

Par conséquent, en raison de la disposition particulière de cette surface de contact appartenant à la nervure de fermeture avant du caisson, qui peut donc par exemple être orientée sensiblement verticalement, c'est-à-dire dans un plan défini par des directions transversale et verticale du mât, ou bien encore légèrement inclinée par rapport à la verticale tout en restant préférentiellement parallèle à la direction transversale, il est avantageusement obtenu une meilleure accessibilité pour la manipulation des organes de fixation destinés à assurer l'assemblage du corps d'attache sur la structure rigide. En effet, on prévoit avantageusement de fixer ce corps sur une surface avant de la nervure de fermeture avant de la structure rigide en forme de caisson. L'ensemble de la structure rigide étant située en arrière par rapport à l'interface de fixation, l'opérateur bénéficie par voie de conséquence d'un espace libre à l'avant de cette interface qui lui facilite grandement la manipulation des différents éléments utilisés pour réaliser la fixation du corps d'attache.

L'opération de pré-positionnement du moteur est effectuée de manière à ce que les deux orifices primaires soit pré-centrés, c'est-à-dire qu'ils soient grossièrement alignés, avant de mettre en oeuvre l'opération d'introduction, dans ces mêmes orifices primaires, de l'axe destiné à constituer ultérieurement le pion de cisaillement permettant le transfert des efforts du moteur vers le mât d'accrochage.

Ensuite, il est donc entrepris cette opération d'introduction de l'axe dans les orifices primaires, cet axe étant pourvu d'une tête bombée de centrage dont la fonction est, durant l'introduction de l'axe, de corriger progressivement le centrage grossier entre les deux orifices primaires si cela s'avère nécessaire, afin d'aboutir à un centrage parfait entre ces deux derniers.

Naturellement, il est noté que le pré-positionnement du moteur par rapport à la structure rigide est effectué avec suffisamment de précision de manière à ce que l'axe à tête bombée puisse pénétrer successivement dans le premier puis dans le second des orifices primaires, ou inversement, en engendrant la correction progressive de centrage se traduisant par un mouvement relatif entre le moteur et la structure rigide, et ce malgré la charge verticale importante associée au moteur.

Enfin, il est indiqué qu'une fois l'opération d'introduction de l'axe achevée, ce dernier est ensuite destiné à rester à demeure dans les deux orifices primaires, afin de constituer le pion de cisaillement entre le corps d'attache et la structure rigide. Par conséquent, l'une des particularités de l'invention réside dans le fait que la tête bombée de centrage, qui peut préférentiellement prendre la forme d'une olive, est tout d'abord employée durant le montage pour assurer le centrage progressif des orifices primaires jusqu'au centrage parfait, puis est ensuite utilisée pour constituer une partie du pion de cisaillement servant à faire transiter des efforts vers la structure rigide durant le fonctionnement du moteur.

De préférence, lorsqu'il est prévu plusieurs pions de cisaillement entre le corps d'attache et la structure rigide, l'opération d'introduction d'un axe équipé d'une tête bombée de centrage est réitérée autant de fois que le nombre de pions de cisaillement prévus. Dans un tel cas, on prévoit de préférence que l'opération initiale de pré-positionnement du moteur est effectuée de manière à mettre tous les premiers orifices primaires en regard de leurs seconds orifices primaires respectivement associés.

Préférentiellement, cette opération de pré-positionnement consiste :
- à approcher le moteur du mât d'accrochage de manière à pouvoir introduire un premier axe de support à travers un premier orifice secondaire et un second orifice secondaire pratiqués respectivement dans le corps d'attache et dans la nervure de fermeture avant, et de manière à pouvoir introduire un second axe de support à travers un premier orifice secondaire et un second orifice secondaire également pratiqués respectivement dans le corps d'attache et dans la nervure de fermeture avant, chacun des deux axes de support étant de diamètre inférieur au diamètre des premier et second orifices secondaires associés ; puis
- à redescendre le moteur jusqu'à obtenir un appui d'une partie supérieure de chacun des deux premiers orifices secondaires du corps d'attache, contre son axe de support associé.

Ainsi, la mise en place de ces axes de support, également appelés supports d'indexation, permet d'assurer un maintien du moteur légèrement en dessous de sa position finale par rapport au mât d'accrochage, cette position étant tout à fait appropriée en vu de l'introduction ultérieure de l'axe à tête de centrage dans les orifices primaires.

De préférence, suite à la mise en place de chaque axe équipé d'une tête bombée de centrage, il est procédé à une extraction de ces axes de support hors des orifices secondaires, à l'aide d'un extracteur adapté. Il est noté que dans le cas préférentiel et avantageux où les orifices secondaires susmentionnés sont ultérieurement destinés à recevoir des pions de cisaillement de secours, dits pions « Fail Safe », cette extraction est alors suivie d'une introduction de deux pions de cisaillement de secours à travers ces mêmes orifices secondaires.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef comportant un mât d'accrochage selon un mode de réalisation préféré de la présente invention ;
- la figure 2 représente une vue en perspective schématisant la reprise des efforts effectuée par le système de montage du moteur équipant le mât d'accrochage montré sur la figure 1 ;
- la figure 3 représente une vue détaillée en perspective de la partie avant du mât montré sur la figure 1 ;
- la figure 4 représente une vue en perspective de la nervure de fermeture avant du caisson appartenant au mât montré sur la figure 3 ; et
- les figures 5a à 5h représentent des vues schématisant différentes opérations d'une étape de fixation mise en oeuvre dans le cadre d'un procédé de montage selon un mode de réalisation préféré de la présente invention, cette étape consistant à fixer le corps d'attache de l'attache moteur avant sur la structure rigide du mât d'accrochage.

### EXPOSÉ DÉTAILLÉ DE MODES DE RÉALISATION PRÉFÉRÉS

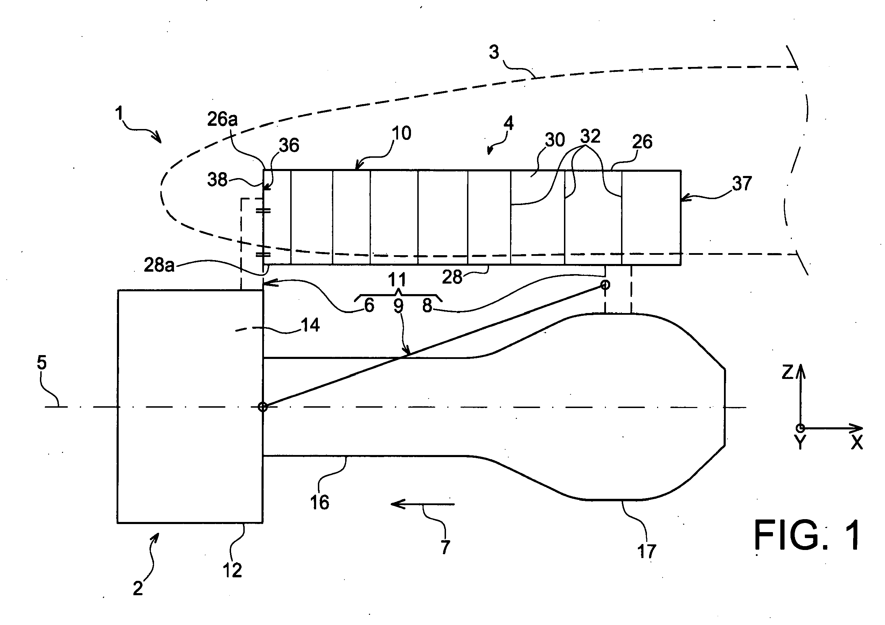

En référence à la figure 1, on voit un ensemble moteur 1 pour aéronef destiné à être fixé sous une aile 3 de cet aéronef, cet ensemble 1 objet de la présente invention étant pourvu d'un mât d'accrochage 4 se présentant sous la forme d'un mode de réalisation préféré de la présente invention.

Globalement, l'ensemble moteur 1 comporte un moteur tel qu'un turboréacteur 2 et le mât d'accrochage 4, ce dernier étant notamment muni d'une structure rigide 10 et d'un système de montage du moteur 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée. A titre indicatif, il est noté que l'ensemble 1 est destiné à être entouré d'une nacelle (non représentée sur cette figure), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est constituée par une attache moteur avant 6 et une attache moteur arrière 8. Le dispositif de reprise 9 prend par exemple la forme de deux bielles latérales (une seule étant visible en raison de la vue de côté) raccordées d'une part à une partie arrière du carter de soufflante 12, et d'autre part sur un palonnier, lui-même monté sur l'attache arrière 8.

L'attache moteur avant 6, dont le positionnement spécifique à la présente invention sera décrit ci-après, est solidarisée au carter de soufflante 12, et est conçue de manière à pouvoir reprendre des efforts générés par le turboréacteur 2 selon les directions Y et Z. A titre indicatif, cette attache avant 6 pénètre de préférence dans une portion d'extrémité circonférentielle du carter de soufflante 12.

L'attache moteur arrière 8 est globalement interposée entre le carter d'éjection 17 et la structure rigide 10 du mât. Elle est conçue classiquement de manière à pouvoir reprendre des efforts générés par le turboréacteur 2 selon les direction Y et Z, mais pas ceux s'exerçant selon la direction X.

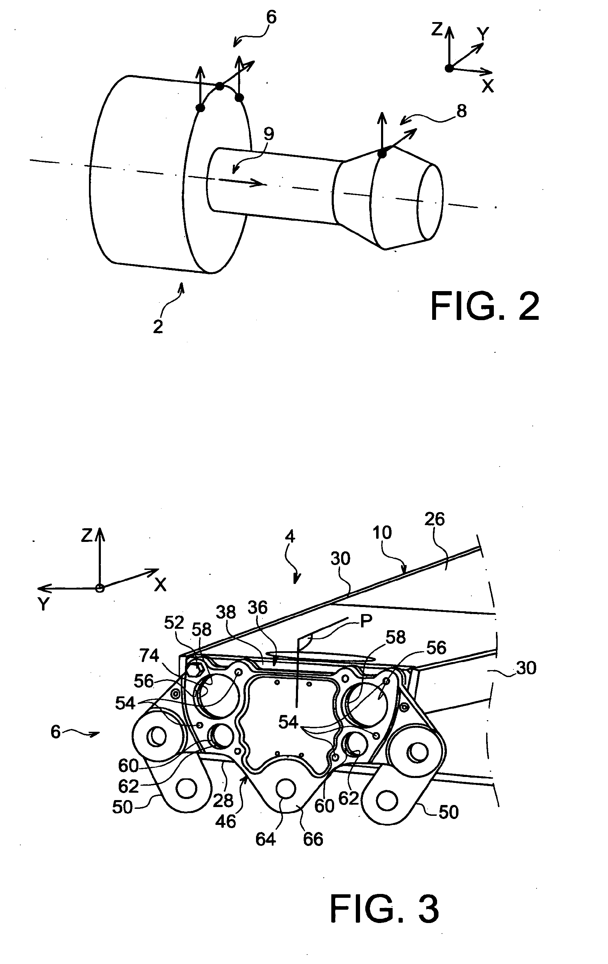

De cette manière, avec le système de montage 11 de nature isostatique, comme cela est montré schématiquement sur la figure 2, la reprise des efforts s'exerçant selon la direction X s'effectue à l'aide du dispositif 9, la reprise des efforts s'exerçant selon la direction Y s'effectue à l'aide de l'attache avant 6 et de l'attache arrière 8, et la reprise des efforts s'exerçant selon la direction Z s'effectue également conjointement à l'aide des attaches 6 et 8. D'autre part, la reprise du moment s'exerçant selon la direction X s'effectue verticalement à l'aide de l'attache avant 6, la reprise du moment s'exerçant selon la direction Y s'effectue verticalement à l'aide de l'attache avant 6 conjointement avec l'attache 8, et la reprise du moment s'exerçant selon la direction Z s'effectue transversalement également à l'aide de l'attache 6 et de l'attache 8.

Toujours en référence à la figure 1, on peut apercevoir que la structure 10 présente la forme d'un caisson s'étendant dans la direction X, ce caisson étant également appelé caisson de torsion. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres. De plus, parmi les nervures transversales précitées, on compte une nervure de fermeture avant 36 du caisson, ainsi qu'une nervure de fermeture arrière 37 du caisson, ces nervures situées aux extrémités du caisson étant donc globalement agencées dans des plans YZ.

A nouveau en référence à la figure 1 montrant un cas où le moteur 2 est destiné à être suspendu sous la voilure 3, il est prévu que la nervure de fermeture avant 36 de la structure 10 serve d'appui frontal pour un corps d'attache de l'attache moteur avant 6. Plus précisément, la nervure 36 dispose d'une surface avant 38 ou surface extérieure, globalement agencée selon un plan YZ mais pouvant disposer d'une géométrie complexe notamment dans le but de définir des excroissances, contre laquelle ce même corps d'attache est destiné à être plaqué.

De préférence, on prévoit qu'une portion de cette surface avant 38 définit une surface de contact avant (non référencée) ou surface de fixation avant destinée à être plaquée et au contact d'une surface de contact arrière (non référencée) ou surface de fixation arrière appartenant au corps d'attache de l'attache avant 6.

Ainsi, cette disposition particulière du corps d'attache permet d'obtenir un recouvrement partiel entre la nervure de fermeture avant 36 et ce même corps d'attache de l'attache avant 6, selon la direction Z, ce qui permet globalement de compacter la structure 10 avec l'ensemble de l'attache moteur avant, et donc de diminuer la protubérance formée par le mât d'accrochage au-dessus de la nacelle du moteur, au droit de cette attache 6, et de réduire ainsi la traînée aérodynamique.

En référence à présent à la figure 3 montrant de façon plus détaillée la partie avant du mât 4 dont un plan P médian vertical parallèle à la direction X constitue un plan de symétrie pour ce même mât, on peut voir que l'attache moteur avant 6 comporte donc un corps d'attache 46 prenant la forme d'une ferrure orientée transversalement dans un plan YZ, et étant rapportée solidairement sur la structure rigide 10 en étant plaquée contre la surface avant 38 de la nervure de fermeture 36.

Pour assurer cet assemblage, l'attache 6 peut comporter des boulons de traction 52 (un seul d'entre eux étant représentés), ces boulons de traction étant orientés selon la direction X et traversant des orifices 54 pratiqués à travers le corps 46 et la nervure 36.

Par ailleurs, l'attache 6 comporte aussi deux pions de cisaillement (non représentés sur la figure 3) également appelés pions de cisaillement actifs et disposés symétriquement par rapport au plan P, ces pions étant aussi préférentiellement orientés selon la direction X. Chaque pion de cisaillement est destiné à traverser un premier orifice primaire 56 pratiqué dans le corps 46, ainsi qu'un second orifice primaire 58 pratiqué dans la nervure 36 et étant aligné dans la direction X avec l'orifice 56.

Au niveau de deux extrémités latérales du corps d'attache 45, l'attache moteur avant 6 présente deux chapes au niveau desquelles sont articulées deux manilles/biellettes 50, chacune de ces dernières formant partiellement une demi-attache de l'attache avant à travers lesquelles peuvent transiter les efforts s'exerçant selon la direction Z. De façon connue de l'homme du métier, ces manilles 50 sont également articulées au niveau de leur autre extrémité sur des chapes appartenant également à l'attache avant 6, et étant rapportées fixement sur le carter du moteur 2.

La conception décrite ci-dessus permet de comprendre que cette attache avant est tout à fait adaptée pour assurer la reprise des efforts s'exerçant selon les directions Y et Z, et également pour assurer la reprise du moment s'exerçant selon la direction X.

A ce titre, on prévoit de préférence que pour chacun des deux groupes d'orifices primaires 56, 58 précités, il est associé un groupe d'orifices secondaires 60, 62 respectivement prévus dans le corps 46 et la nervure 36, chaque groupe d'orifices secondaires étant prévu pour loger un pion de cisaillement de secours (non représenté) dit pion « Fail Safe ». En effet, le montage de chaque pion de secours dans le premier orifice secondaire 60 et le second orifice secondaire 62 s'effectue avec un jeu radial de manière à ce qu'aucun effort ne transite par ce dernier en conditions normales, et de sorte que ce pion puisse constituer un nouveau chemin d'effort en cas de rupture du pion de cisaillement principal auquel il est associé.

Il est noté qu'une alternative de réalisation peut, de façon connue, consister à prévoir que les deux pions de cisaillement soient conçus de manière à intégrer la fonction « Fail Safe » de secours, ce qui permet de ne pas avoir à prévoir de pions et d'orifices secondaires 60, 62.

Toujours à titre indicatif, il est noté que cette fonction de secours « Fail Safe » est également assurée pour la jonction entre le corps d'attache 46 et le carter moteur, par l'intermédiaire d'un axe 64 « Fail Safe » monté avec jeu au niveau d'une partie centrale inférieure 66 du corps 46.

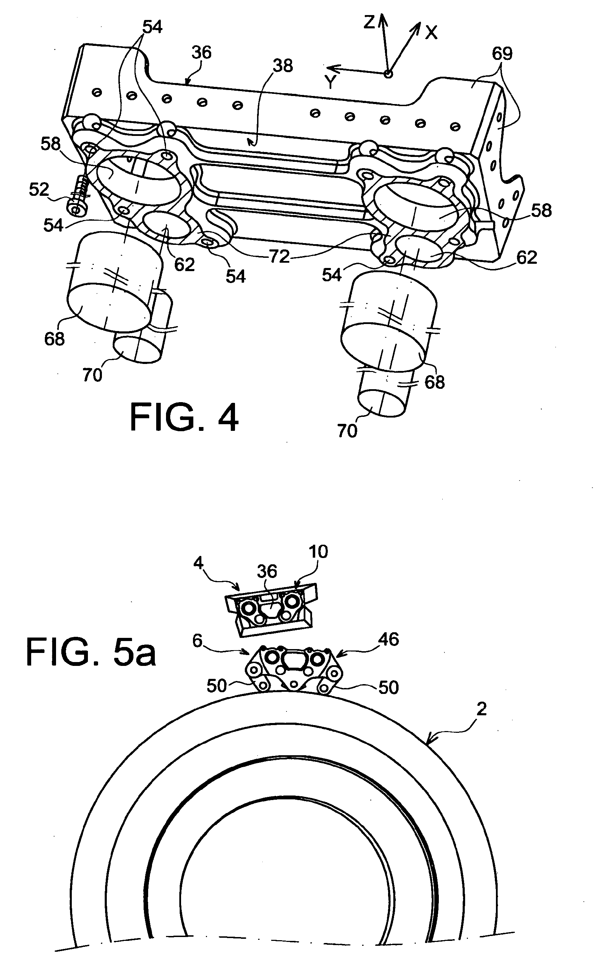

En référence à présent à la figure 4 montrant la nervure de fermeture avant 36 du caisson, on peut se rendre compte que la surface avant 38 de cette nervure dispose d'une surface globalement orientée selon un plan YZ, mais qui présente en réalité de préférence des excroissances faisant saillie vers l'avant. Par ailleurs, la nervure 36 dispose de quatre ailettes 69 destinées à permettre sa fixation sur les longerons 26, 28 ainsi que sur les deux panneaux latéraux 30.

Les excroissances susmentionnées sont préférentiellement localisées au niveau des portions de la nervure 36 qui délimitent les orifices 54, 58, 62 pour loger les boulons 52, les pions de cisaillement 68 et les pions de secours « Fail Safe » 70. Par ailleurs, c'est au niveau de la partie la plus avant de ces excroissances que la surface avant 38 délimite la surface de contact avant 72, destinée à être plaquée et au contact de la surface de contact arrière du corps d'attache 46. Cette surface de contact 72 ou surface de fixation, hachurée sur la figure 4, est de préférence sensiblement orientée selon un plan YZ, et donc globalement située au niveau des contours des orifices 54, 58, 62 précités.

Naturellement, il est à comprendre que la surface de contact arrière ou surface de fixation du corps 46, référencée « 74 » sur la figure 3, dispose de préférence d'une forme complémentaire de celle de la surface 72, et est donc de préférence sensiblement orientée dans le même plan YZ que cette dernière.

A présent en référence aux figures 5a à 5h, il va être décrit un procédé de montage du moteur 2 sur le mât 4 selon un mode de réalisation préféré de la présente invention, et plus particulièrement une étape de fixation du corps d'attache 46 de l'attache avant 6 sur la nervure de fermeture avant 36 du caisson 10.

La figure 5a montre que préalablement à la réalisation de cette étape de fixation, le moteur 2 porte le corps d'attache 46, notamment à l'aide des manilles/biellettes 50 articulées sur le carter de soufflante. De plus, le moteur repose dans une position dite verticale ou droite dans laquelle le corps d'attache 46 se situe vers le haut, tandis que le mât 4 occupe une position quelconque au-dessus du moteur 2.

Avant de procéder au déplacement du moteur 2 par l'intermédiaire de moyens de hissage conventionnels, le corps 46 est équipé d'un outillage permettant de le bloquer en position par rapport au moteur, et donc d'interdire un pivotement de ce corps 46 autour de ses deux manilles/biellettes 50 associées. Ainsi, l'opération ultérieure de pré-positionnement n'est avantageusement pas perturbée par un mouvement relatif entre le corps 46 et le moteur 2.

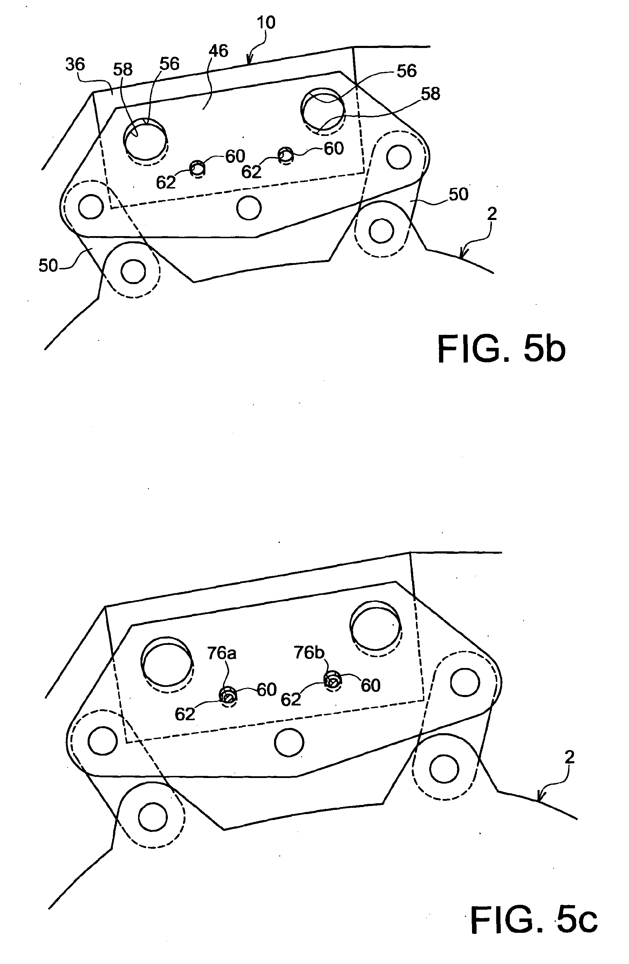

L'opération de pré-positionnement du moteur 2 par rapport au mât 4 peut alors débuter, son but étant de mettre en regard chacun des deux premiers orifices primaires 56 avec son second orifice primaire 58 associé. On fait en sorte que le pré-positionnement du moteur 2 soit effectué de manière à obtenir un centrage grossier entre les orifices primaires, en hissant préférentiellement le moteur 2 dans une position légèrement supérieure à sa position finale par rapport au mât 4. Par conséquent, comme on peut l'apercevoir sur la figure 5b, les premiers orifices primaires 56 sont donc légèrement décalés vers le haut par rapport aux seconds orifices primaires 58 pratiqués dans la nervure 36, de même que les premiers orifices secondaires 60 sont donc légèrement décalés vers le haut par rapport aux seconds orifices secondaires 62 pratiqués dans cette même nervure.

Ensuite, l'opération de pré-positionnement du moteur 2 est poursuivie en introduisant un premier axe de support 76a à travers le premier groupe d'orifices secondaires 60, 62, ainsi qu'en introduisant et un second axe de support 76b à travers le second groupe d'orifices secondaires 60, 62.

Bien entendu, les deux axes de support 76a, 76b, également appelés supports d'indexation, disposent d'un diamètre inférieur au diamètre des orifices secondaires 60, 62, le rapport entre ces diamètres assurant des jeux de fonctionnement et pouvant, par exemple, être compris entre 0,6 et 0,9. Cette spécificité est naturellement prévue de sorte que l'introduction des axes 76a, 76b puisse être réalisée sans gêne malgré la présence.du décalage vertical entre les divers orifices de diamètre sensiblement identiques. Après l'introduction de ces axes 76a, 76b réalisée de préférence manuellement et sans friction dans les orifices secondaires, ceux-ci reposent ensuite par gravité sur une partie inférieure de leur premier orifice secondaire associé 60, sans être au contact de leur second orifice secondaire associé 62 comme le montre la figure 5c.

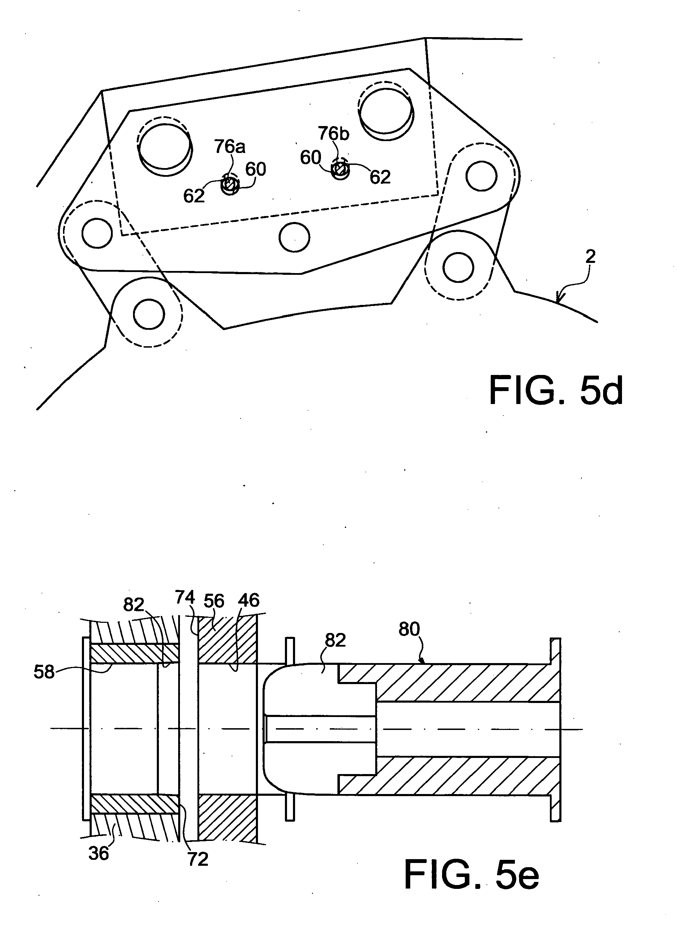

Ensuite, l'opération consiste à redescendre le moteur 2, toujours par l'intermédiaire des moyens de hissage, jusqu'à obtenir un appui d'une partie supérieure de chacun des deux premiers orifices secondaires 60, contre son axe de support 76a, 76b associé. Dans cette position montrée sur la figure 5d, il est également noté que les deux axes de support 76a, 76b reposent sur une partie inférieure de leur second orifice secondaire 62 associé. C'est cette mise en cisaillement des axes 76a, 76b qui permet à elle seule de maintenir le pré-positionnement du moteur par rapport au mât, ce pré-positionnement étant alors tel que le moteur 2 se situe légèrement au-dessous de sa position finale par rapport au mât 4, comme cela est clairement visible sur la figure 5d. Ensuite, le pré-positionnement est achevé par la mise en contact des surfaces de contact 72 et 74 (référencées sur la figure 5e) par un outillage adapté, par exemple du type serre-joint.

Par conséquent, une fois cette opération achevée, on peut donc comprendre que le moteur n'a pas besoin de coopérer avec des moyens de hissage pour être maintenu dans sa position de pré-positionnement par rapport au mât 4.

Une nouvelle opération est ensuite entreprise, visant à introduire deux axes 80 respectivement dans le premier groupe d'orifices primaires et dans le second groupe d'orifices primaires.

Comme on peut l'apercevoir sur la figure 5e, chaque axe 80 est équipé d'une tête bombée de centrage 82 disposant de préférence de la forme d'une olive et étant par exemple montée par vissage ou encastrement sur un corps d'axe de l'axe 80, ce dernier étant introduit d'abord à travers le premier orifice primaire 56 du corps 46, puis à travers le second orifice primaire 58 légèrement décalé vers le haut. Ainsi, pendant l'introduction de l'axe 80 à travers le second orifice 58, la tête 82 va progressivement coopérer avec une partie avant chanfreinée 84 de ce dernier, qui est prévue pour faciliter la pénétration de l'axe 80 dans ce même orifice 58. Naturellement, la pénétration de la tête de centrage 82 de l'axe 80 dans l'orifice 58 va avoir pour conséquence de centrer progressivement les deux orifices 56, 58 de même diamètre, jusqu'à obtenir un centrage parfait entre ces derniers. A titre indicatif, il est noté que le diamètre des orifices 56, 58 est identique, au jeu près, au diamètre de l'axe 80 les pénétrant.

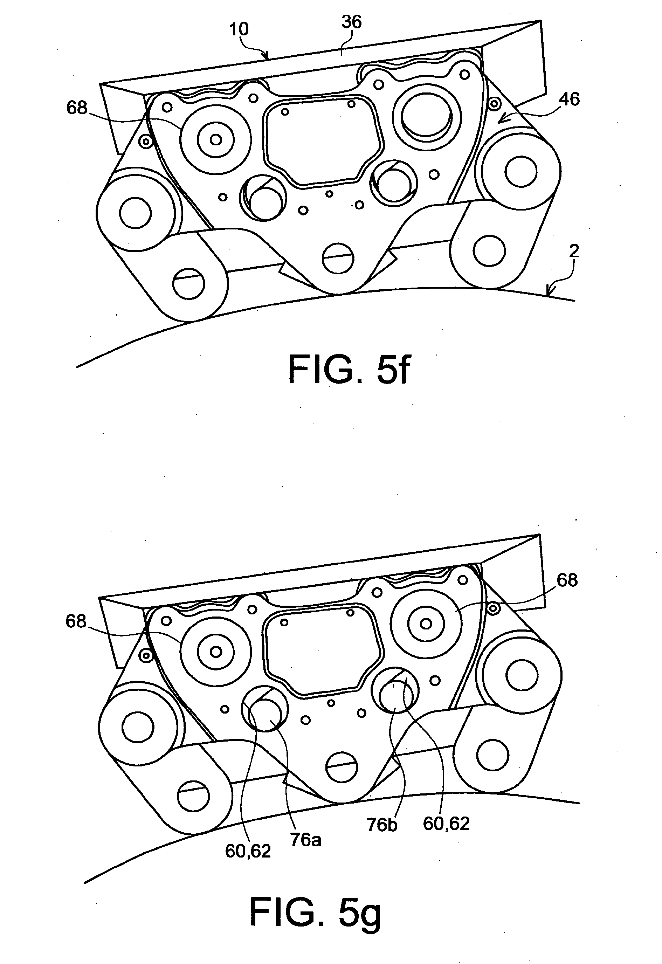

Après l'introduction de l'axe 80, celui-ci est logé dans ses deux orifices associés 56, 58, et constitue avantageusement le pion de cisaillement 68 comme cela est montré sur la figure 5f.

En référence à la figure 5g, on procède bien entendu à la même introduction d'axe pour le second groupe d'orifices primaires, afin d'obtenir la mise en place du second pion de cisaillement 68. Une fois les deux pions de cisaillement introduits dans leurs orifices primaires respectifs, simultanément ou successivement, le moteur 2 rehaussé suite au centrage des orifices 56, 58 occupe alors sa position finale par rapport au mât 4.

Dans cette position finale, les orifices secondaires 60, 62 sont également parfaitement centrés deux à deux.

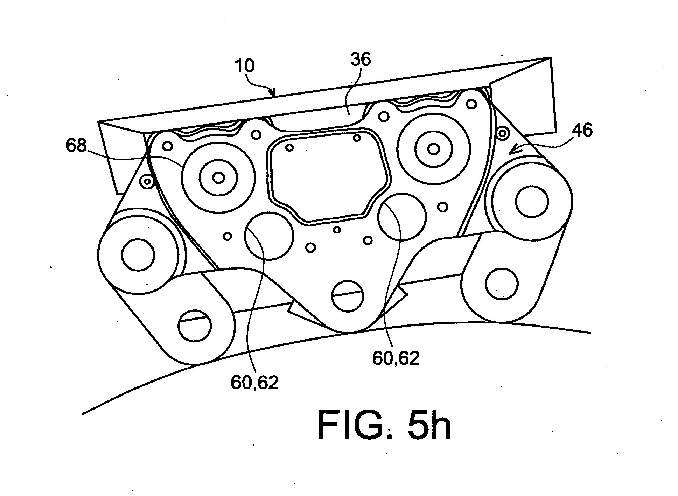

Ces axes de support 76a, 76b peuvent alors subir une extraction et laisser les orifices secondaires libres comme le montre la figure 5h, afin de permettre une opération ultérieure de mise en place des deux pions de cisaillement de secours 70 dans ces mêmes orifices secondaires 60, 62.

L'étape de fixation du corps d'attache 46 peut ensuite être poursuivie par une opération de mise en place des boulons de traction précités, également orientés selon la direction X.

Dans le procédé selon l'invention, une étape de fixation similaire peut être mise en oeuvre pour l'attache arrière 8, tandis que le montage des bielles de reprise de poussée peut s'opérer d'une manière classique connue de l'homme du métier.

Bien entendu, diverses modifications peuvent être apportées par l'homme du métier au procédé et à l'ensemble moteur pour aéronef qui viennent d'être décrits, uniquement à titre d'exemples non limitatifs. A cet égard, on peut notamment indiquer qui si l'ensemble moteur a été présenté dans une configuration adaptée pour qu'il soit suspendu sous la voilure de l'aéronef, cet ensemble pourrait également se présenter dans une configuration différente lui permettant d'être monté au-dessus de cette même voilure.

## Revendications

1. Mât d'accrochage (4) pour moteur (2) d'aéronef, ledit mât comportant une structure rigide (10) formant un caisson fermé vers l'avant par une nervure de fermeture avant (36), ainsi qu'un système de montage du moteur (11) monté fixement sur ladite structure rigide (10) et comportant notamment une attache moteur avant (6) comprenant un corps d'attache (46) monté fixement sur ladite structure rigide (10), ledit corps d'attache (46) étant plaqué contre une surface avant (38) de ladite nervure de fermeture avant (36), et
**caractérisé en ce que** l'attache moteur avant (6) comprend au moins un pion de cisaillement (68) traversant au moins partiellement ledit corps d'attache (46) ainsi que ladite nervure de fermeture avant (36), ledit pion de cisaillement assurant la transmission des efforts selon les directions transversale (Y) et verticale (Z) du mât.

2. Mât d'accrochage (4) selon la revendication 1, **caractérisé en ce que** ledit corps d'attache (46) comprend une surface de contact arrière (74) agencée au contact d'une surface de contact avant (72) de la structure rigide (10) appartenant à ladite surface avant (38) de ladite nervure de fermeture avant (36).

3. Mât d'accrochage (4) selon la revendication 1 ou la revendication 2, **caractérisé en ce que** l'attache moteur avant (6) comprend en outre une pluralité de boulons de traction (52) assurant la fixation du corps d'attache (46) sur ladite nervure de fermeture avant (36).

4. Mât d'accrochage (4) selon l'une quelconque des revendications précédentes, **caractérisé en ce que** chaque pion de cisaillement (68) est orienté sensiblement selon une direction longitudinale (X) du mât.

5. Mât d'accrochage (4) selon l'une quelconque des revendications précédentes, **caractérisé en ce que** l'attache avant comprend deux pions de cisaillement (38) traversant chacun au moins partiellement ledit corps d'attache (46) ainsi que ladite nervure de fermeture avant (36), lesdits deux pions (68) étant espacés l'un de l'autre selon une direction transversale (Y) du mât.

6. Mât d'accrochage (4) selon l'une quelconque des revendications précédentes, **caractérisé en ce que** ladite nervure de fermeture avant (36) est orientée selon un plan défini par des directions transversale (Y) et verticale (Z) du mât.

7. Mât d'accrochage (4) selon l'une quelconque des revendications précédentes, **caractérisé en ce que** ladite attache moteur avant (6) est conçue de manière à assurer la reprise des efforts s'exerçant selon une direction transversale (Y) et une direction verticale (Z) du mât, et également conçue de manière à assurer la reprise du moment s'exerçant selon une direction longitudinale (X) de ce mât.

8. Mât d'accrochage (4) selon l'une quelconque des revendications précédentes, **caractérisé en ce que** ledit système de montage du moteur (11) comporte en outre un dispositif de reprise des efforts de poussée (9), ainsi qu'une attache moteur arrière (8) conçue de manière à assurer la reprise des efforts s'exerçant selon les directions transversale (Y) et verticale (Z) du mât.

9. Mât d'accrochage (4) selon l'une quelconque des revendications précédentes, **caractérisé en ce que** ledit système de montage du moteur (11) constitue un système isostatique.

10. Ensemble moteur (1) pour aéronef **caractérisé en ce qu'**il comprend un mât d'accrochage (4) selon l'une quelconque des revendications précédentes, ainsi qu'un moteur (2) monté fixement sur ledit mât.

11. Procédé de montage d'un moteur d'aéronef sur la structure rigide d'un mât d'accrochage selon l'une quelconque des revendications 1 à 9, **caractérisé en ce qu'**il comporte une étape de fixation, sur ladite nervure de fermeture avant (36) de la structure rigide, du corps d'attache (46) de l'attache moteur avant (6) préalablement monté sur un carter du moteur, ce corps d'attache (46) étant destiné à être fixé sur ladite nervure de fermeture avant (36) par l'intermédiaire d'au moins un pion de cisaillement (68) traversant un premier orifice primaire (56) et un second orifice primaire (58) pratiqués respectivement dans le corps d'attache (46) et dans la nervure de fermeture avant (36), ladite étape de fixation du corps d'attache (46) sur ladite nervure de fermeture avant (36) comprenant les opérations successives suivantes :
- pré-positionnement du moteur (2) par rapport au mât d'accrochage (4) dans le but de mettre le premier orifice primaire (56) en regard du second orifice primaire (58) ; et
- introduction d'un axe (80) équipé d'une tête bombée de centrage (82) à travers les deux orifices primaires (56, 58) en regard, de sorte que cet axe équipé de la tête bombée de centrage et logé dans les deux orifices primaires (56, 58) constitue ledit pion de cisaillement (68).

12. Procédé de montage selon la revendication 11, **caractérisé en ce que** ladite opération d'introduction d'un axe (80) équipé d'une tête bombée de centrage (82) est réitérée autant de fois qu'il est prévu de pion de cisaillement (68) entre le corps d'attache (46) et la structure rigide (10).

13. Procédé de montage selon la revendication 11 ou la revendication 12, **caractérisé en ce que** ladite opération de pré-positionnement consiste :
- à approcher le moteur (2) du mât d'accrochage (4) de manière à pouvoir introduire un premier axe de support (76a) à travers un premier orifice secondaire (60) et un second orifice secondaire (62) pratiqués respectivement dans le corps d'attache (46) et dans la nervure de fermeture avant (36), et de manière à pouvoir introduire un second axe de support (76b) à travers un premier orifice secondaire (60) et un second orifice secondaire (62) également pratiqués respectivement dans le corps d'attache (46) et dans la nervure de fermeture avant (36), chacun desdits deux axes de support (76a, 76b) étant de diamètre inférieur au diamètre des premier et second orifices secondaires (60, 62) associés ; puis
- à redescendre le moteur (2) jusqu'à obtenir un appui d'une partie supérieure de chacun des deux premiers orifices secondaires (60) du corps d'attache (46), contre son axe de support associé (76a, 76b).

14. Procédé de montage selon la revendication 13, **caractérisé en ce que** suite à la mise en place de chaque axe (80) équipé d'une tête bombée de centrage (82), il est procédé à une extraction desdits axes de support hors desdits orifices secondaires (60, 62).

15. Procédé de montage selon la revendication 14, **caractérisé en ce que** postérieurement à ladite extraction des axes de support (76a, 76b), il est procédé à l'introduction de deux pions de cisaillement de secours (70) à travers lesdits orifices secondaires (60, 62).

## Claims

1. An engine pylon mount (4) for an aircraft engine (2), said pylon including a rigid structure (10) forming a box forwardly closed by a forward closure rib (36), as well as a system (11) for mounting the engine fixedly mounted on said rigid structure (10) and notably including a forward engine attachment (6) comprising an attachment body (46) fixedly mounted on said rigid structure (10), said attachment body (46) lying against a forward surface (38) of said forward closure rib(36), and
**characterized in that** the forward engine attachment (6) comprises at least one shear pin (68) passing at least partly through said attachment body (46) as well as said forward closure rib (36), the shearing pin ensuring transmission of the forces along the transverse (Y) and vertical (Z) directions of the pylon mount.

2. The engine pylon mount (4) according to claim 1, **characterized in that** said attachment body (46) comprises an aft contact surface (74) laid out in contact with a forward contact surface (72) of the rigid structure (10) belonging to said forward surface (38) of said forward closure rib (36),

3. The engine pylon mount (4) according to claim 1 or claim 2, **characterized in that** the forward engine attachment (6) further comprises a plurality of tension bolts (52) to ensure securing of the attachment body (46) onto said forward closure rib (36).

4. The engine pylon mount (4) according to any of the preceding claims, **characterized in that** each shearing pin (68) is oriented substantially along a longitudinal direction (X) of the pylon mount.

5. The engine pylon mount (4) according to any of the preceding claims, **characterized in that** the forward attachment comprises two shearing pins (68) each passing at least partly through said attachment body (46) as well as said forward closure rib (36), said two pins (68) being spaced apart from each other along a transverse direction (Y) of the pylon mount.

6. The engine pylon mount (4) according to any of the preceding claims, **characterized in that** said forward closure rib (36) is oriented along a plane defined by transverse (Y) and vertical (Z) directions of the pylon.

7. The engine pylon mount (4) according to any of the preceding claims, **characterized in that** said forward engine attachment (6) is designed so as to ensure spreading of the loads exerted in a transverse direction (Y) and vertical direction (Z) of the pylon mount, and also designed to ensure spreading of the moment exerted in a longitudinal direction (X) of this pylon mount.

8. The engine pylon mount (4) according to any of the preceding claims, **characterized in that** said engine mounting system (11) further includes a thrust-load spreading device (9), as well as an aft engine attachment (8) designed to ensure the spreading of loads exerted along the transverse (Y) and vertical (Z) directions of the pylon mount.

9. The engine pylon mount (4) according to any of the preceding claims, **characterized in that** said engine mounting system (11) forms an isostatic system.

10. An aircraft engine assembly (1) **characterized in that** it comprises an engine pylon mount (4) according to any of the preceding claims, and an engine (2) fixedly mounted on said pylon mount.

11. A method for mounting an aircraft engine on the rigid structure of an engine pylon mount according to any of claims 1 to 9, **characterized in that** it comprises a step for securing, on said forward closure rib (36) of the rigid structure, the attachment body (46) of the forward engine attachment (6) mounted beforehand on an engine case, this attachment body (46) being intended to be attached onto said forward closure rib (36) via at least one shearing pin (68) passing through a first primary orifice (56) and a second primary orifice (58) respectively made in the attachment body (46) and the forward closure rib (36), said step for securing the attachment body (46) onto said forward closure rib (36) comprising the following successive operations:
- pre-positioning the engine (2) relative to the engine pylon mount (4) for the purpose of placing the first primary orifice (56) opposite the second primary orifice (58); and
- inserting a pin (80) fitted with a convex centering head (82) through the two primary orifices (56, 58) facing each other, so that this pin fitted with the convex centering head and housed in the two primary orifices (56, 58) forms said shearing pin (68).

12. The mounting method according to claim 11, **characterized in that** said operation for inserting a pin (80) fitted with a convex centering head (82) is repeated as many times as the number of intended shearing pins (68) between the attachment body (46) and the rigid structure (10).

13. The mounting method according to claim 11 or claim 12, **characterized in that** said pre-positioning operation consists of:
- bringing the engine (2) close to the engine pylon mount (4) so that it is possible to insert a first supporting pin (76a) through a first secondary orifice (60) and a second secondary orifice (62) made in the attachment body (46) and forward closure rib (36) respectively, and so that a second supporting pin (76b) may be inserted through a first secondary orifice (60) and a second secondary orifice (62) also made in the attachment body (46) and forward closure rib (36) respectively, each of said two supporting pins (76a, 76b) having a smaller diameter than the diameter of the associated first and second secondary orifices (60, 62); and then
- lowering the engine (2) until support is obtained from an upper portion of each of the two first secondary orifices (60) of the attachment body (46) against its associated supporting pin (76a, 76b).

14. The mounting method according to claim 13, **characterized in that** subsequently to the placement of each pin (80) fitted with a convex centering head (82), it is proceeded with extraction of said supporting pins from said secondary orifices (60, 62).

15. The mounting method according to claim 14, **characterized in that** after said extraction of said supporting pins (76a, 76b), it is proceeded with insertion of two failsafe shearing pins (70) through said secondary orifices (60, 62).

## Patentansprüche

1. Aufhängungssystem (4) für ein Luftfahrzeugtriebwerk (2), wobei das System eine starre Struktur (10), die einen Kasten bildet, der nach vorne durch eine vordere Verschlußrippe (36) verschlossen ist, sowie ein System zur Anbringung des Triebwerks (11), das fest an der starren Struktur (10) angebracht ist und insbesondere eine vordere Triebwerkbefestigung (6) umfaßt, die einen Befestigungskörper (46) umfaßt, der fest an der starren Struktur (10) angebracht ist, wobei der Befestigungskörper (46) gegen eine Vorderfläche (38) der vorderen Verschlußrippe (36) gepreßt ist, umfaßt, und
**dadurch gekennzeichnet, daß** die vordere Triebwerkbefestigung (6) mindestens einen Scherbolzen (68) umfaßt, der zumindest partiell den Befestigungskörper (46) sowie die vordere Verschlußrippe (36) durchsetzt, wobei der Scherbolzen die Übertragung von Kräften in Transversalrichtung (Y) und Vertikalrichtung (Z) des Systems gewährleistet.

2. Aufhängungssystem (4) nach Anspruch 1, **dadurch gekennzeichnet, daß** der Befestigungskörper (46) eine hintere Kontaktfläche (74) umfaßt, die in Kontakt mit einer vorderen Kontaktfläche (72) der starren Struktur (10), die zur Vorderfläche (38) der vorderen Verschlußrippe (36) gehört, angeordnet ist.

3. Aufhängungssystem (4) nach Anspruch 1 oder Anspruch 2, **dadurch gekennzeichnet, daß** die vordere Triebwerkbefestigung (6) ferner mehrere Zugbolzen (52) umfaßt, die die Befestigung des Befestigungskörpers (46) an der vorderen Verschlußrippe (36) gewährleisten.

4. Aufhängungssystem (4) nach einem der vorhergehenden Ansprüche, **dadurch gekennzeichnet, daß** jeder Scherbolzen (68) im wesentlichen in Längsrichtung (X) des Systems ausgerichtet ist.

5. Aufhängungssystem (4) nach einem der vorhergehenden Ansprüche, **dadurch gekennzeichnet, daß** die vordere Befestigung zwei Scherbolzen (38) umfaßt, die jeweils zumindest partiell den Befestigungskörper (46) sowie die vordere Verschlußrippe (36) durchsetzen, wobei die zwei Bolzen (68) in Transversalrichtung (Y) des Systems voneinander beabstandet sind.

6. Aufhängungssystem (4) nach einem der vorhergehenden Ansprüche, **dadurch gekennzeichnet, daß** die vordere Verschlußrippe (36) in einer durch die Transversalrichtung (Y) und die Vertikalrichtung (Z) des Systems festgelegten Ebene ausgerichtet ist.

7. Aufhängungssystem (4) nach einem der vorhergehenden Ansprüche, **dadurch gekennzeichnet, daß** die vordere Motorbefestigung (6) derart gestaltet ist, daß sie die Aufnahme von Kräften, die in Transversalrichtung (Y) und Vertikalrichtung (Z) des Systems auftreten, gewährleistet, und auch derart gestaltet ist, daß sie die Aufnahme des Moments, das in Längsrichtung (X) dieses Systems auftritt, gewährleistet.

8. Aufhängungssystem (4) nach einem der vorhergehenden Ansprüche, **dadurch gekennzeichnet, daß** das System zur Anbringung des Triebwerks (11) ferner eine Vorrichtung zur Aufnahme von Schubkräften (9) sowie eine hintere Triebwerkbefestigung (8), die derart gestaltet ist, daß sie die Aufnahme von in Transversalrichtung (Y) und Vertikalrichtung (Z) des Systems auftretenden Kräften gewährleistet, umfaßt.

9. Aufhängungssystem (4) nach einem der vorhergehenden Ansprüche, **dadurch gekennzeichnet, daß** das System zur Anbringung des Triebwerks (11) ein isostatisches System bildet.

10. Triebwerkanordnung (1) für ein Luftfahrzeug, **dadurch gekennzeichnet, daß** sie ein Aufhängungssystem (4) nach einem der vorhergehenden Ansprüche sowie ein fest an dem System angebrachtes Triebwerk (2) umfaßt.

11. Verfahren zur Anbringung eines Luftfahrzeugtriebwerks an der starren Struktur eines Aufhängungssystems nach einem der Ansprüche 1 bis 9, **dadurch gekennzeichnet, daß** es einen Schritt der Befestigung des Befestigungskörpers (46) der vorderen Triebwerkbefestigung (6), der vorher an einem Triebwerkgehäuse angebracht wurde, an der vorderen Verschlußrippe (36) der starren Struktur umfaßt, wobei der Befestigungskörper (46) an der vorderen Verschlußrzppe (36) durch mindestens einen Scherbolzen (68), der durch eine erste Primäröffnung (56) und eine zweite Primäröffnung (58), die im Befestigungskörper (46) bzw. in der vorderen Verschlußrippe (36) ausgeführt sind, geht, befestigt werden soll, wobei der Schritt der Befestigung des Befestigungskörpers (46) an der vorderen Verschlußrippe (36) die im folgenden angegebenen aufeinanderfolgenden Operationen umfaßt:
- Vorpositionierung des Triebwerks (2) in Bezug auf das Aufhängungssystem (4) mit dem Ziel, die erste Primäröffnung (56) der zweiten Primäröffnung (58) gegenüberliegend zu ringen; und
- Einführung einer Achse (80), die mit einem gewölbten Zentrierungskopf (82) ausgestattet ist, durch die zwei gegenüberliegenden Primäröffnungen (56, 58) derart, daß diese Achse, die mit dem gewölbten Zentrierungskopf ausgestattet ist und in den zwei Primäröffnungen (56, 58) lagert, den Scherbolzen (68) bildet.

12. Anbringungsverfahren nach Anspruch 11, **dadurch gekennzeichnet, daß** die Operation der Einführung einer Achse (80), die mit einem gewölbten Zentrierungskopf (82) ausgestattet ist, so oft wiederholt wird, wie Scherbolzen (68) zwischen dem Befestigungskörper (46) und der starren Struktur (10) vorgesehen sind.

13. Anbringungsverfahren nach Anspruch 11 oder Anspruch 12, **dadurch gekennzeichnet, daß** die Operation der Vorpositionierung darin besteht, daß
- das Triebwerk (2) dem Aufhängungssystem (4) derart angenähert wird, daß eine erste Hilfsachse (76a) durch eine erste Sekundäröffnung (60) und eine zweite Sekundäröffnung (62), die in dem Befestigungskörper (46) bzw. der vorderen Verschlußrippe (36) ausgeführt sind, eingeführt werden kann und eine zweite Hilfsachse (76b) durch eine erste Sekundäröffnung (60) und eine zweite Sekundäröffnung (62), die ebenfalls in dem Befestigungskörper (46) bzw. der vorderen Verschlußrippe (36) ausgeführt sind, eingeführt werden kann, wobei jede der zwei Hilfsachsen (76a, 76b) einen geringeren Durchmesser als den Durchmesser der zugehörigen ersten und zweiten Sekundäröffnungen (60, 62) aufweist; sodann
- das Triebwerk (2) abgesenkt wird, bis eine Abstützung eines oberen Teils von jeder der zwei ersten Sekundäröffnungen (60) des Befestigungskörpers (46) an der zugehörigen Hilfsachsen (76a, 76b) erhalten wird.

14. Anbringungsverfahren nach Anspruch 13, **dadurch gekennzeichnet, daß** anschließend an das Plazieren jeder Achse (80), die mit einem gewölbten Zentrierungskopf (82) ausgestattet ist, ein Herausziehen der Hilfsachsen aus den Sekundäröffnungen (60, 62) durchgeführt wird.

15. Anbringungsverfahren nach Anspruch 14, **dadurch gekennzeichnet, daß** nach dem Herausziehen der Hilfsachsen (76a, 76b) das Einführen von zwei Sicherungsscherbolzen (70) durch die Sekundäröffnungen (60, 62) durchgeführt wird.
